# EUROPEAN PATENT SPECIFICATION

(11) **EP 2 432 629 B1**
(45) Date of publication and mention of the grant of the patent: **17.07.2019**
(21) Application number: 10732422.0
(22) Date of filing: 18.05.2010
(51) Int. Cl.: B29C 70/58, B29B 13/02, B29C 35/02, B29C 35/08, B29C 70/76

(54) **PROCESS OF PRODUCING ARTICLES**
VERFAHREN ZUR HERSTELLUNG VON ARTIKELN
PROCÉDÉ DE PRODUCTION D'ARTICLES

(30) Priority: 19.05.2009 IT PS20090011
(43) Date of publication of application: 28.03.2012
(73) Proprietor: Biesse S.p.A., Pesaro (IT)
(72) Inventor: CANTI, Max, I-61012 Gradara (IT); BERNARDI, Paolo, I-47841 Cattolica (IT)
(74) Representative: Mangini, Simone
(86) International application number: PCT/IB2010/001156
(87) International publication number: WO 2010/133944

(56) References cited:
- WO-A1-2004/048463
- WO-A2-2007/140469
- US-A- 4 302 413
- US-A- 5 075 057
- US-A1- 2003 187 102
- US-A1- 2004 112 996
- US-A1- 2007 149 625
- US-A1- 2007 241 482
- US-B1- 6 569 279

## Description

### TECHNICAL FIELD

The present invention relates to a method of manufacturing (or treating) articles, to a composite material and to an article.

### BACKGROUND OF THE INVENTION

Patent application US 2007149625 discloses a process for recycling plastic material by reducing a sample of plastic material to form plastic particles having a desired particle size; providing a susceptor agent to the plastic particles which imparts a dielectric property to the plastic particles; providing a bonding agent to the plastic particles; and treating the plastic particles with microwave energy to form a useable plastic material.

In the US Patent No. 5075057 scrap plastic materials including thermoplastic and cured thermosetting components are recycled and molded into products of predetermined shape, without the necessity of separating the different plastics from one another, by a process of shredding and milling the mixture to reduce it to a fine particle size, homogenizing the fine particle size mixture into a free flowing macro homogenous powder form, warming the homogenized mixture to an elevated temperature but at which it maintains its free flowing condition, dry blending the warm mixture with a reinforcing material or a filler and then compression molding the blend at elevated temperatures and pressures into a product of pre-determined shape.

Composite materials containing particles of woody material (or natural fibers) and urea-formaldehyde, phenol-formaldehyde, melamine-formaldehyde resinous materials are known.

Such composite materials are usually obtained by mixing particles of woody material with the resinous materials so as to obtain a mixture, which is inserted in a mould and subjected at the same time to heat and pressure.

It is worth noting that to obtain the correct molding of the material in order to manufacture the article the mould must be maintained at relatively high temperatures (220°-230°C) for relatively long time (12-13 minutes for a 50mm thick panel). A correct heating (to a temperature of at least 100°C) also of the innermost portion of the mixture can be usually obtained in this manner.

It is further worth noting that the methods currently used for manufacturing articles generally require the use of resins containing formaldehyde, which can guarantee adequate kinetics of polymerization to the resins themselves despite the relatively low temperatures which are reached by the innermost zones of the mixture.

During the molding, a high pressure must further be exerted so as to reduce the presence of air in the mixture and improve the transfer of heat through the mixture itself. This determines an increase of specific weight of the so obtained material and articles.

The known methods therefore show many drawbacks, such as: they imply high costs, they require the use of polluting, harmful substances (such as formaldehyde), they allow manufacturing only of materials with a relatively high specific weight, they are relatively slow and require a high use of energy..

### DISCLOSURE OF INVENTION

It is the object of the present invention to provide a method of manufacturing articles, a composite material and an article, which allow to at least partially overcome the limits of the prior art, and which are at the same time easy and cost-effective to implement and make.

### SUMMARY

According to the present invention, a method of manufacturing (or treating) articles, a composite material and an article are provided as disclosed in the independent claims that follow, and preferably, in any of the claims depending either directly or indirectly on the independent claim.

### BRIEF DESCRIPTION OF THE FIGURES

The invention will be described below with reference to the accompanying drawings which illustrate non-limitative embodiments thereof, in which:
- figure 1 diagrammatically shows a machine for implementing a method according to the present invention; :
- figure 2 diagrammatically shows a method according to the present invention; and
- figure 3 is a diagrammatic cross section of the article partially shown in figure 2.

### EMBODIMENTS OF THE INVENTION

According to a first aspect of the present invention, a method of manufacturing articles (in particular, panels) is provided. The method comprises: a step of mixing, during which particles of at least one substantially inert material, particles of at least one microwave opaque substance and particles of at least one
organic binder are mixed with one another so as to obtain a mixture; a step of applying, during which said mixture is treated with microwaves so that the particles of the microwave opaque substance at least partially absorb the microwaves and dissipate energy in form of heat, which heats the binder so as to allow the particles of the binder itself to bind and constitute a matrix in which the particles of substantially inert material and the particles of microwave opaque substance are inserted; a step of cooling, which is at least partially subsequent to the step of applying and during which the matrix is cooled. In particular, the matrix at least partially (more in particular, completely) solidifies during the step of cooling.

It is worth noting that the substantially inert material is chosen so that the particles of substantially inert material cannot bond to one another if placed in contact and subjected to a temperature of up to 200°C, at a pressure of up to 100kg/cm² and in absence of other elements.

Advantageously, the thermal conductivity of the substantially inert material is lower than 10 W·m⁻¹·K⁻¹.

According to some embodiments, the substantially inert material comprises (more specifically, is) an inorganic material. According to some embodiments, the substantially inert material is an expanded inorganic material and is, in particular, chosen from the group consisting of: expanded porous glass, expanded clay, perlite, pumice, vermiculite (and possibly others) and a combination thereof. The articles obtained from this type of inert material may be used for thermal and/or acoustic insulation.

When the substantially inert material is an inorganic material, particularly high temperatures can be reached during the step of applying, reducing the risk of damaging (e.g. setting fire to) the particles of substantially inert material. The total time of the method can be further reduced by increasing the temperature of the step of applying.

According to further embodiments (for the same purpose indicated above), the substantially inert material may be rubber from used tires.

According to other embodiments, the substantially inert material is a material of vegetable origin and is, in particular, selected in the group consisting of: vegetable fibers, cotton, hemp, kenaf, cellulose, wool, flax, paper, cork, dry grass, hay, wheat chaff, rice glumes (and other woody materials) and a combination thereof. Articles obtained from this type of inert materials may be used as material for construction and/or for the production of furniture.

In particular, the substantially inert material is mainly constituted by cellulose and/or lignin. In other words, at least 50% by weight of the substantially inert material is given by the sum of cellulose and lignin. In particular, the substantially inert material comprises (more specifically, is) wood (or a material similar to wood). For example, according to some embodiments, the substantially inert material is at least partially obtained from hemp (in particular, the substantially inert material is hemp wood). In this regard, it is worth noting that hemp wood is relatively cheap and can be manufactured in greater amounts and more easily (and faster) than other types of wood (for example, poplar wood).

According to further embodiments, the substantially inert material is at least partially obtained from olive stones. Articles comprising olive stones can be advantageously used in constructions, i.e. as parquet floor elements.

Advantageously, the substantially inert material of vegetable origin is dried before use.

The mixture comprises from 50% to 95% (in particular, up to 90%) by weight of the substantially inert material, with respect to the total weight of the mixture. According to some embodiments, the mixture comprises from 75% to 90% by weight of the substantially inert material, with respect to the total weight of the mixture. Advantageously, the mixture comprises at least 80% by weight of the substantially inert material, with respect to the total weight of the mixture.

It is noted that articles with an extremely high percentage of substantially inert material (higher than that obtainable with the known methods) can be obtained using the method of the present invention.

Advantageously, the binder can at least partially liquefying at a temperature (it has a melting temperature) either lower than or equal to 200°C and higher than 60°, in particular higher than 100°C. According to some embodiments, the binder can at least partially liquefy at a temperature (it has a melting temperature) from 110°C to 130°C.

The binder is chosen from the group consisting of: thermoplastic polymers, thermosetting pre-polymers. It is worth noting that thermoplastic polymers from the recycling of waste plastic material with thermoplastic material impurities of different nature, which are difficult to separate, can be used.

The thermosetting pre-polymers are materials which have not yet fully polymerized and/or reticulated, which if subjected to an application of heat firstly soften (liquefy) and then set in substantially irreversible manner (i.e. they do not soften if subjected only to heat again). In particular, setting is due to reticulation reactions.

Advantageously, the binder is free from formaldehyde.

Advantageously, such a formaldehyde free binder can be used to recycle used wood also heavily polluted with formaldehyde deriving from previous processes, by dispersing urea with the task of absorbing free formaldehyde. On the contrary, this is not possible in known processes because the urea in excess would not allow urea-formaldehyde reticulation. Therefore, in known processes, further formaldehyde must be added when used wood is recycled. Consequently, the articles obtained with known processes contain a nearly double amount of formaldehyde (partially deriving from the used wood and partially added to obtain the matrix, in which the particles of wood are conglomerated).

According to some embodiments, the binder comprises (in particular, consists of) a resin chosen from the group consisting of: polyurethanes, polyesters (e.g. polylactic acid), acrylic resins, metacrylic resins. According to specific embodiments, the binder comprises (in particular, is) a polyester. In particular, the binder comprises (more in particular is) an epoxy-polyester (i.e. a combination of an epoxy resin and a polyester).

The mixture comprises from 2.5% to 49% by weight of binder, with respect to the total weight of the mixture. According to some embodiments, the mixture comprises from 8% to 20% by weight of binder, with respect to the total weight of the mixture. In particular, the mixture comprises at least 5% (in particular, at least 10%) by weight of binder, respecting the total weight of the mixture.

The microwave opaque substance is a substance capable of at least partially absorbing microwaves and dissipating the energy thus absorbed in heat. According to some embodiments, the microwave opaque substance is chosen so that a sample thereof (in particular, weighing 25g and substantially cube-shaped) inserted in a microwave field (in particular, at a frequency of 2.45 GHz) at a power of 1kW increases its temperature up to at least a temperature at which the binder at least partially liquefies. Advantageously, the microwave opaque substance is chosen so that a specimen thereof (in particular, weighing 25g and substantially cube-shaped) inserted in a microwave field (in particular, at the frequency of 2.45 GHz) at a power of 1kW increases its temperature at a rate of at least 50°C/min (advantageously, at least 80°C/min) to at least 60°C (advantageously, at least 100°C). According to some embodiments, the mentioned specimen inserted in the aforesaid microwave field increases it temperature to a temperature either equal to or greater than (in particular, to a temperature of 2°C to 5°C higher than) the temperature at which the binder at least partially liquefies. According to specific embodiments, the mentioned specimen inserted in the microwave field defined above increases it temperature to at least 130°C (advantageously, to at least 200°C - in particular, to at least 400°C).

Advantageously, the mentioned specimen inserted in the aforesaid microwave field increases its temperature at a rate of at least 100°C/min (advantageously, of at least 150°C/min).

It is worth noting that available commercial instruments can be used to make the measurements mentioned above. For example, the microwave field can be measured with commercial measurers; the temperatures of the specimens can be measured with temperature sensors appropriately connected to an electronic control unit; the microwave field may be generated in commercial ovens.

The methods described in "Chemistry under extreme or non-classical conditions" by C.D. Hubbard (John Wiley & Sons, Spektrum Akademischer Verlag, 1997) and/or "Microwave and Metals" by M. Gupta et al. (John Wiley & Sons, Singapore, 2007) can further be followed to make the measurements above.

According to some embodiments, the microwave opaque substance comprises (in particular, is) a material chosen from the group consisting of: carbon (in form of coal and/or graphite), vanadium, nickel, cobalt, zinc, aluminum, cobalt oxide, ferrite, tungsten oxide, copper oxide, vanadium pentoxide, stannous chloride, antimony trichloride, zinc chloride, silicon carbide (SiC), strontium titanate (SrTiO₃), barium titanate (BaTiO₃) and a combination thereof.

Additionally or alternatively to the above, the microwave opaque substance comprises (in particular, is) one or more thermosetting polymers. For example, the microwave opaque substance may be obtained from generally not recyclable plastic materials, such as processing waste, melamine or phenol articles, printed circuits from scrapped computers, material resulting from smoothing the back of decorative plastic laminates, etc.

According to specific embodiments, the microwave opaque substance is chosen from the group consisting of: coal, graphite, ferrite, stannous chloride (SnCl₂), zinc chloride (ZnCl₂), zinc and a combination thereof. Advantageously, the microwave opaque substance is chosen from the group consisting of: carbon, graphite, stannous chloride.

Advantageously, the microwave opaque substance is coal or graphite (in particular, coal) or a combination thereof. In these cases, the microwave opaque substance is particularly efficient and low cost.

The use of stannous chloride as an opaque substance allows not to modify the color of the other material used. In other words, wood color articles can be obtained by using stannous chloride when the substantially inert material is wood.

The mixture comprises from 0.1% to 25% by weight of microwave opaque substance, with respect to the total weight of the mixture. According to some embodiments, the mixture comprises from 5% to 10% by weight of microwave opaque substance, with respect to the total weight of the mixture. In particular, the mixture comprises no more than 8% by weight of microwave opaque substance, with respect to the total weight of the mixture.

Advantageously, the sum of the weights of the microwave opaque substance and of the binder is from 5% to 50% of the total weight of the mixture. In particular, the sum of the weights of the microwave opaque substance and of the binder is less than 30% (advantageously, less than 20%) of the total weight mixture.

According to some embodiments, the particles of substantially inert material have size (i.e. diameter) either smaller than or equal to 50mm (in particular, smaller than 20mm - advantageously smaller than 5mm). The particles of substantially inert materials have size either larger than or equal to 10µm (in particular, either larger than or equal to 100µm).

According to some embodiments, the particles of microwave opaque material have sizes (i.e. diameter) either smaller than or equal to 1mm (in particular, 500µm). Advantageously, the particles of microwave opaque material have sizes (i.e. diameter) either smaller than or equal to 100µm (in particular, either smaller than or equal to 10µm). The particles of the microwave opaque substance have sizes either larger than or equal to 0.1µm (in particular, either larger than or equal to 1µm).

According to some embodiments, the particles of the binder have sizes (i.e. diameter) either smaller than or equal to 1cm (in particular, smaller than 1mm). Advantageously, the particles of binder have sizes (i.e. diameter) either smaller than or equal to 120µm (in particular, either smaller than or equal to 50µm). The particles of binder have sizes either larger than or equal to 0.1µm (in particular, either larger than or equal to 1µm).

The sizes are obtained by means of subsequent sieving with sieves with holes of decreasing sizes (diameter). The diameter of the holes of the first sieve which does not allow the particles through indicates the size (i.e. diameter) of the particles.

The measurements by means of subsequent sieving are carried out until the sizes (i.e. diameter) of the particles and of the holes of the sieves allow doing it (in particular, to a minimum of 0.05mm). Under these sizes (in particular, 0.05mm), the sizes of the particles are measured as average diameter D(v,0.5) by means of a laser granulometer - in particular, by using a Mastersizer Microplus Ver.2.19 laser granulometer (Malvern Instruments® Ltd).

According to some embodiments, the method comprises a step of molding, which is at least partially subsequent to the step of applying and during which pressure is applied to the mixture inserted in a mould.

It is worth noting that considerable advantages can be obtained with respect to the prior art by using the method in accordance with this invention. In particular, advantages include:
- shorter production time: by propagating in the mixture, the heat is very rapidly transferred to the binder;
- reduction of costs and energy needed for manufacturing: less energy is needed to uniformly heat the mixture (it is worth noting that the inert material is thermally insulating) and to compress the mixture itself;
- considerable reduction of costs of the actuation press because the method allows to proceed without heating the same;
- better quality of articles: more homogenous distribution of heat inside the mixture allows a more effective bonding between the various components; furthermore, a higher amount of inert material can be used (with this regard, it is worth noting that it has been experimentally observed that the manufactured articles are fit for screwing, i.e. a screw inserted in one of them can be effectively maintained in position);
- articles can be obtained with relatively low density: high pressures do not need to be impressed to improve heat transfer;
- the use of formaldehyde or other polluting elements can be avoided: production is sufficiently fast even without these additives; and
- by appropriately choosing the microwave opaque substance (either conductive or partially conductive substances) the resulting articles can be treated by powder coating.

Experimentally, it has been observed that the advantages shown above, in addition to not being suggested in any manner in the prior art, as far as the applicant is aware, are also remarkable from the point of view of quantity.

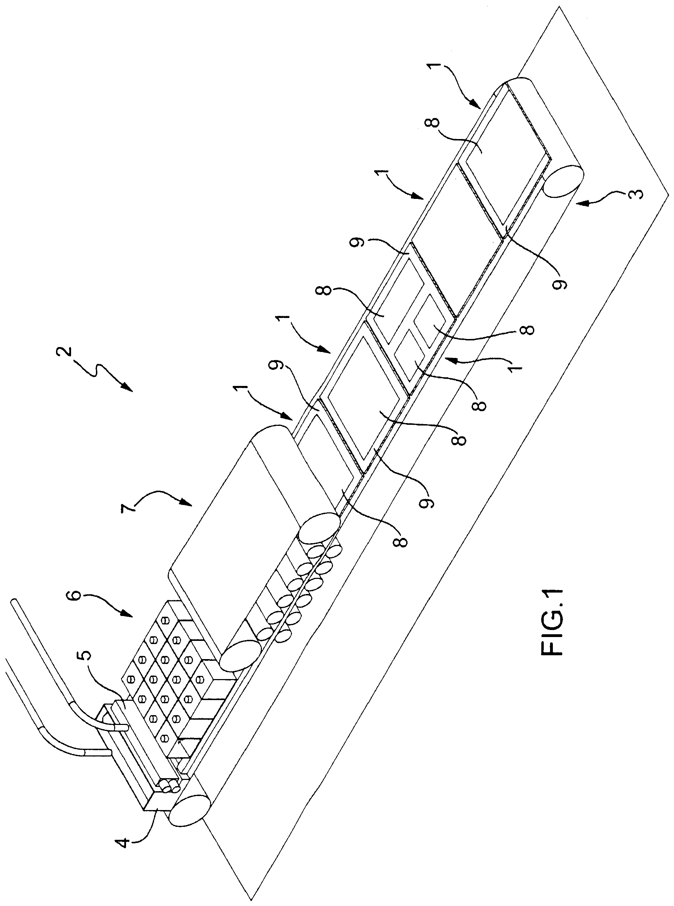

In accordance with the embodiment shown in figure 1, the articles 1 are continuously manufactured by means of a machine 2 comprising a conveyor belt 3, onto which the various components of the mixture are fed by means of the hoppers 4 and 5. The machine 2 further comprises a microwave source 6 appropriately shielded towards the outside; and a pressing group 7, which is arranged downstream of the source 6 and is adapted to apply pressure onto the mixture to which the microwaves have (just) been applied. The material obtained after cooling (at the pressing assembly 7) may be subsequently cut by a cutting assembly (of known type and not shown) so as to obtain articles 1 (in particular, panels) of various sizes.

According to embodiments (not shown) a discontinuous machine for manufacturing articles 1 is provided; in other words, this type of machine does not contemplate a continuous movement of the mixture during the various steps of the method. In this manner, the times of the various steps can be independently adjusted.

According to some embodiments, the particles of substantially inert material are heterogeneously distributed in the mixture. The mixture has at least one first zone 8, wherein the substantially inert material has a given density, and at least one second zone 9, wherein the substantially inert material has a greater density (in particular, at least 1.2 times higher, in particular 1.3 times higher) with respect to the density of the first zone. Advantageously, the substantially inert material in the second zone 9 has a density of at least one and a half times the density of the first zone. According to some embodiments, the density of the substantially inert material in the second zone 9 is at least twice the density of the substantially inert material in the first zone 8.

According to specific embodiments, considering equal (surface) extensions of the first and second zone 8 and 9, the quantity of particles (in particular, half) in the substantially inert material in the first zone 8 is lower than the quantity of particles in the substantially inert material present in the second zone 9. "Quantity" means the total weight of the particles in the respective zone. Alternatively, "quantity" may mean the number of particles in the zone.

In order to obtain this, a thicker layer of particles of substantially inert material can be deposited in zone 9 (by means of the hopper 4 and appropriate distribution systems).

Alternatively or additionally to the above, the particles of substantially inert material in the first zone 8 comprise a first material, and the particles of the substantially inert material in the second zone 9 comprise a second material, different from the first material and having a higher density (in particular, at least double) the density of the first material.

According to some examples: zone 8 comprises hemp wood and zone 9 comprises poplar wood; zone 8 comprises wood (e.g. hemp and/or popular) and zone 9 comprises one or more inorganic materials (expanded), as defined above.

According to some embodiments, the size of the particles of substantially inert material in the first zone 8 is larger than (in particular, at least double) the average size of the particles of the substantially inert material in the second zone 9.

As described above, the mechanical features of the various zones of the article can be modulated. In particular, the zones with a higher density (or better material) are more compact and/or harder than the zones with lower density (or with worse material). This may be useful, in particular, if determined zones are intended to be machined (e.g. cut) or if it is intended to make the parts of the article most exposed to stress more solid. In these cases, the determined zones may be advantageously with a higher density (or made of better material).

In this regard, it must be noted that in figure 1 the second zones 9 are arranged at the edges of the articles 1 (or where an edge of the article is intended to be made). The inner zones 9 of the articles can be useful if it is intended to cut and obtain panels of smaller size.

Alternatively or additionally to the above, the zone/s 9 is/are on the outer surface of the article 1 and the zone/s 8 is/are arranged inside the article 1 itself. The zone/s 9 at least partially cover/s the zone/s 8.

For example, if the article 1 is a panel, the article 1 comprises two zones 9, which define two covering layers and a zone 8 arranged between the two covering layers.

According to some embodiments (not shown), the method comprises a step of extruding, which is at least partially subsequent to the step of applying and during which the mixture is extruded through a die of given shape.

Advantageously, the mixture comprises from 60% to 85% (in particular, from 70% to 80%) by weight of the substantially inert material, with respect to the total weight of the mixture.

It is worth noting that the percentages of substantially inert material are particularly remarkable considering that until now (as far as the applicant is aware) it was possible to extrude materials with no more than 40% by weight of substantially inert material particles (in particular, wood flour). In particular, the extrusion is carried out using a screw extruder (of known type and not shown).

According to particular embodiments, the mixture is extruded and applied in the area of (in particular, in) at least one outer margin of the article (in particular, a panel) so as to obtain an edge of the article.

Drawn articles can therefore be obtained by using the method of the present invention.

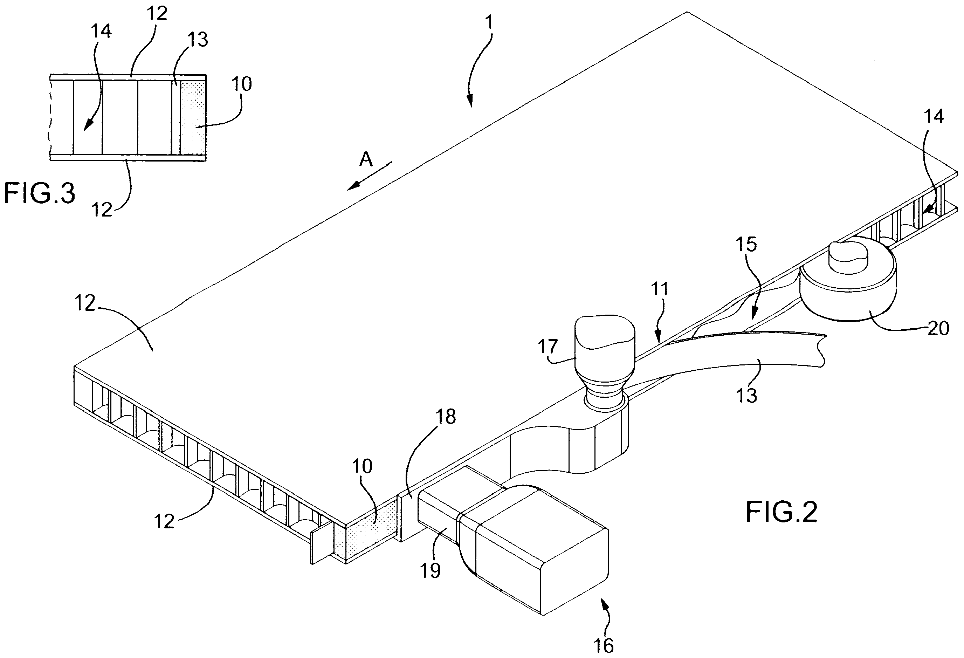

Figure 2 shows an embodiment which comprises a step of coupling, during which the mixture 10 is applied in the area of (in particular, in) at least one outer margin of the article (in particular, a panel); the step of applying is at least partially subsequent to the step of coupling; an edge of the article 1 is obtained at the end of the step of cooling.

The article 1 comprises two sheets 12 of "noble" material (e.g. wood) with a honeycomb structure interposed, i.e. a composite material (e.g. according to the present invention). The mixture is applied between the two sheets of "noble" material (e.g. wood).

Advantageously, the method comprises a step of inserting, during which an element 13 made of at least partially microwave reflecting material (in particular, a metallic material) is inserted in the area of (in particular, in) the outer margin 11 of the article 1 (in particular, a panel); during the step of coupling, which is at least partially subsequent to the step of inserting, the mixture 10 is applied so that the element 13 of at least partially microwave reflecting material is arranged between an inner part 14 of the article 1 and the mixture 10.

Advantageously, the method comprises a step of machining of the edge, during which the outer edge 11 of the article 1 is milled so as to obtain a channel 15, in which the mixture 10 is applied. According to the various embodiment, the element 13 made of partially microwave reflecting material may be inserted in the channel 15.

According to some embodiments, additionally or alternatively to milling, the outer margin 11 is compressed and/or crushed so as to obtain a channel 15, within which the mixture 10 is applied.

Advantageously, the mixture applied in the area of (in particular in) the outer margin 11 is compacted (i.e. pressed towards the inside of the article 1, in particular against the element 19).

As shown in figure 2, the operations described above are carried out by a device 16, which comprises a hopper 17 (through which the mixture 10 is fed), a compactor (for pressing the mixture 10 towards the element 13), a microwave emitter 19, and a milling cutter 20 (to make the channel 15). In order to carry out the mentioned operations, the article 1 is moved in direction A with respect to the device 16.

According to the invention, said mixture comprises from 1% to 20% by weight of a liquid, with respect to the total weight of the mixture. The liquid is chemically substantially inert. According to some specific embodiments, said mixture comprises up to 15% by weight of a liquid, with respect to the total weight of the mixture. Advantageously, the mixture comprises from 5% to 10% by weight of the liquid, with respect to the total weight of the mixture.

The liquid allows a better distribution of the particles of binder about the particles of substantially inert material (and of the microwave opaque substance). In other words, the liquid allows to coat the particles of substantially inert material (and the microwave opaque substance) with a larger amount of particles of binder.

Advantageously, the liquid has a boiling temperature either equal to or higher than that the temperature at which the binder can at least partially liquefy.

The liquid has a boiling temperature lower than 270°C (flammability temperature of wood). More preferably, the liquid has a boiling temperature either lower than or equal to 250°C. In this manner, the safety of the procedure can be increased by reducing the risk (when wood is used as substantially inert material) of setting fire to the substantially inert material.

Advantageously, the liquid has a boiling temperature up to 5 degrees higher than the temperature at which the binder can at least partially liquefy. In this manner, the development of heat can be controlled in extremely accurate manner (avoiding damage caused by excessive heat) allowing at the same time to speed up the method to the maximum.

In particular, the liquid has a boiling temperature of 90°C. More in particular, the liquid has a boiling temperature from 110°C to 130°C.

"Chemically substantially inert liquid" means a liquid that in the conditions of the aforesaid method does not react with the other components of the mixture (in particular, with the binder and the microwave opaque substance). In particular, the chemically substantially inert liquid is harmless for humans. According to other embodiments, the chemically substantially inert liquid is chosen from water, a diol containing from 2 to 4 atoms of carbon (C₂-C₄), a triol containing from 3 to 4 atoms of carbon (C₃-C₄) and a combination thereof. In particular, the chemically substantially inert liquid is chosen from water, ethylene glycol, propylene glycol, propanetriol or a combination thereof. More in particular, the chemically substantially inert liquid is water or ethylene glycol or a combination thereof.

It is worth noting that the chemically substantially inert liquid may comprise the mixture of water with a diol or a triol (in particular, water and ethylene glycol) In this manner the boiling temperature of the substantially inert liquid can be varied (by modifying the relative amounts of the components). For example, a liquid which contains more water than ethylene glycol will have a boiling temperature more similar to the boiling temperature of water; a liquid which contains more ethylene glycol than water will have a boiling temperature more similar to the boiling temperature of the ethylene glycol.

Advantageously, crystalline urea is dissolved in the liquid to absorb the free formaldehyde if recycled wood mainly from conglomeration process with urea-formaldehyde is used. In particular, the mixture comprises at least 1% by weight of the urea with respect to the total weight of the mixture.

In accordance with a second aspect of the present disclosure a composite material is provided, the composition of which is substantially similar to that of the mixture defined in accordance with the present invention (with the binder in form of matrix). In particular, the material is obtained in accordance with the method described in accordance with the first aspect of the present invention.

In accordance with a third aspect of the present disclosure a material is obtained using the method according to the first or third or fourth aspect of the present disclosure

In accordance with a fourth aspect of the present disclosure a material obtainable using the method according to the first aspect of the present invention is provided.

In accordance with a further aspect of the present disclosure an article comprising the material according to the second aspect of the present disclosure is provided.

In accordance with a further aspect of the present disclosure an article obtained using the method according to the first aspect of the present invention is provided.

In accordance with a further aspect of the present invention, an article obtainable using the method according to the first aspect of the present disclosure is provided.

Unless explicitly indicated otherwise, the content of the references (articles, books, patent applications, etc.) mentioned in this text are quoted integrally.

Additional features of the present invention will be apparent in the description that follows only by way of non-limitative examples.

### Example 1

The following were mixed:
A) 90% (by weight with respect to the total weight of a mixture) of hemp wood as-is from "scutching" (mechanical extraction of the textile fiber), carried out in turn on round bales formed by mowed hemp naturally dried in the sun on the field, in the period from the end of July-beginning of August, containing: natural humidity 16%. Wood particles sized (1-2 mm x 1-2 mm), to approximately (20 mm x 4-8 mm.) Apparent density 90 k/m³.
B) 10% (by weight with respect to the total weight of a mixture) of a resin-graphite combination, constituted by 80% powder granulometry from 0.1-80 micron; epoxy-polyester thermosetting resin, with melting point and thermosetting reticulation triggered at 130°C, 20% natural graphite granulometry from 0.1-20 micron.

### Source of the thermosetting resin:

- Commercial use intended for transparent varnishing of architectonical elements using epoxy-polyester 530/0015 type electrostatic dry power system.
- Manufacturer Tiger (Austria).

### Source of the graphite:

- Finely ground "natural graphite" mineral made to our specifications by the some company, Tiger.

### Operations carried out:

- weighing and mechanical mixing of components;
- filling a cylinder, diameter 105 mm, height 60mm, made of microwave permeable material (PVC).
- positioning on rotating plate;
- exposing to microwaves emitted by a household appliance at 750 Watt for 3 minutes;
- compressing the mixture with a metallic piston of the same internal diameter as the PVC cylinder to obtain a thickness of approximately 20 mm at ambient temperature (22°C);
- holding for 2 minutes;
- extracting the "chipboard" woody conglomerate of density 270 kg/m³.

### Example 2

The following were mixed:
A) 90% (by weight with respect to the total weight of a mixture) of hemp wood as-is from scutching (mechanical extraction of the textile fiber), carried out in turn on round bales formed by mowed hemp naturally dried in the sun on the field, in the period from the end of July-beginning of August, containing approximately 16% of humidity. Woody particles of size from approximately 100 to 300 micron. Apparent density 110 kg/m³.
B) 10% (by weight with respect to the total weight of a mixture) of a resin-graphite combination, constituted by 80% powder granulometry from 0.1-80 micron; epoxy-polyester thermosetting resin, with melting point and thermosetting reticulation triggered at 130°C, 20% natural graphite granulometry from 0.1-20 micron. Resin and graphite as described in example 1.

### Operations carried out:

- weighing and mechanical mixing of components;
- filling a cylinder diameter 105 mm, height 40mm, made of microwave permeable material (PVC);
- positioning on rotating plate;
- exposing to microwaves emitted by a household appliance at 750 Watt for 3 minutes;
- compressing the mixture with a metallic piston of the same internal diameter as the PVC cylinder to obtain a thickness of approximately 4 mm at ambient temperature (22°C);
- holding for 2 minutes;
- extracting the "HDF" woody conglomerate of density 1100 kg/m³.

### Example 3

The following were mixed:
A) 90% (by weight with respect to the total weight of a mixture) of hemp wood as-is from scutching (mechanical extraction of the textile fiber), carried out in turn on round bales formed by mowed hemp naturally dried in the sun on the field, in the period from the end of July-beginning of August, containing approximately 16% of natural humidity. Woody particles of dimensions from approximately 100 to 300 micron. Apparent density 110 kg/m³.
B) 10% (by weight with respect to the total weight of a mixture) of a resin-graphite combination, constituted by 80% powder granulometry from 0.1-80 micron; epoxy-polyester thermosetting resin, with melting point and thermosetting reticulation triggered at 130°C, 20% natural graphite granulometry from 0.1-20 micron. Resin and graphite as described in example 1.

### Operations carried out:

- weighing and mechanical mixing of components;
- positioning on the bottom of the cylinder a HDF disc of conglomerated hemp 4 mm thick prepared with the side in sight dusted with 20-30 micron of resinous matrix mixture powder with graphite;
- filling a cylinder diameter 105 mm, height 60 mm, made of microwave permeable material (PVC);
- positioning a second HDF disc of conglomerated hemp, 4 mm thick, prepared with the side in contact with the mixture contained in the cylinder by dusting as described above of resinous matrix mixture and graphite in use in the conglomerate;
- positioning on rotating plate;
- exposing to microwaves emitted by a household appliance at 750 Watt for 3 minutes;
- compressing the mixture with a metallic piston of the same internal diameter as the PVC cylinder to obtain a thickness of approximately 20 mm at ambient temperature (22°C);
- holding for 2 minutes;
- extracting the sandwich (pseudo hollow cored wood full inside, instead of honeycomb inside) with outer reinforcement made of HDF conglomerate of density 1100 kg/m³ and inner conglomerate made of hemp of approximately 270 kg/m³.

### Example 4

The following were mixed:
A) 90% (by weight with respect to the total weight of the mixture) of quartz grit of granulometry perfectly included from 80 to 500 micron. Dry, apparent density 1500 kg/m³.
B) 10% (by weight with respect to the total weight of a mixture) of a resin-graphite combination, constituted by 80% powder granulometry from 0.1-80 micron; epoxy-polyester thermosetting resin, with melting point and thermosetting reticulation triggered at 130°C, 20% natural graphite granulometry from 0.1-20 micron.

### Source of the thermosetting resin:

Commercial use intended for transparent varnishing of architectonical elements using epoxy-polyester 530/0015 type electrostatic dry power system - Manufacturer Tiger (Austria).

### Source of the graphite:

Finely ground "natural graphite" mineral made to our specifications by the same company, Tiger.

### Operations carried out:

- weighing and mechanical mixing of components;
- filling a cylinder diameter 105 mm, height 20 mm, made of microwave permeable material (PVC);
- positioning on rotating plate;
- exposing to microwaves emitted by a household appliance at 750 Watt for 3 minutes;
- compressing the mixture with a metallic piston of the same diameter as the inner diameter of the PVC cylinder at ambient temperature (22°C), partial compression to 100 kg/cm² with short decompression to release air, final pressure 350 kg/cm².
- holding for 2 minutes;
- extracting the stone conglomerate 14 mm thick, density 2100 kg/m³.

The materials obtained according to the examples from 1 to 4 have shown remarkably good mechanical features.

## Claims

1. A method of manufacturing articles, the method comprising:
a step of mixing, during which particles of at least one substantially inert material, particles of at least one microwave opaque substance and particles of at least one organic binder are mixed with one another so as to obtain a mixture;
a step of applying, during which said mixture is treated with microwaves so that the particles of the microwave opaque substance at least partially absorb the microwaves and dissipate energy in form of heat, which heats the binder so as to allow the particles of the binder itself to bind and constitute a matrix in which the particles of substantially inert material and the particles of microwave opaque substance are inserted; and
a step of cooling, which is at least partially subsequent to the step of applying and during which the matrix is cooled, at least partially solidifying;
the mixture comprising from 1% to 20% by weight, with respect to the total weight of the mixture, of a liquid, which does not react with the other components of the mixture in the conditions of the method and has a boiling temperature lower than 270°C; from 50% to 95% by weight, with respect to the total weight of the mixture, of the substantially inert material; from 0.1% to 25% by weight, with respect to the total weight of the mixture, of the microwave opaque substance; from 2.5% to 20% by weight, with respect to the total weight of the mixture, of the binder;
the substantially inert material is such that its particles cannot bond to one another if placed in contact and subjected to a temperature of up to 200°C, at a pressure of up to 100kg/cm² and in absence of other elements; the microwave opaque: substance is a substance capable of at least partially absorbing microwaves and dissipating the energy thus absorbed in heat

2. A method according to claim 1, wherein the mixture comprises from 75% to 90% by weight, with respect to the total weight of the mixture, of the substantially inert material; from 5% to 10% by weight, with respect to the total weight of the mixture, of the microwave opaque material; from 5% by weight, with respect to the total weight of the mixture, of the binder.

3. A method according to claim 1 or 2, wherein the particles of substantially inert material have sizes either smaller than or equal to 50mm; the particles of microwave opaque substance have sizes either smaller than or equal to 100µm; the particles of binder have sizes either smaller than or equal to 120µm.

4. A method according to one of the preceding claims, wherein the particles of substantially inert material have sizes larger than or equal to 10µm; the particles of the microwave opaque substance have sizes either larger than or equal to 0.1µm; the particles of the binder have sizes either larger than or equal to 0.1µm.

5. A method equal to one of the preceding claims, wherein the substantially inert material has a thermal conductivity lower than 10 W·m⁻¹·K⁻¹; the binder is capable of at least partially liquefying at a temperature either lower than or equal to 200°C and higher than 60°C

6. A method according to one of the preceding claims, wherein the substantially inert material mainly consists of cellulose and/or lignin

7. A method according to claim 6, wherein the substantially inert material is at least partially obtained from hemp.

8. A method according to one of the preceding claims, wherein the microwave opaque substance is chosen so that a specimen thereof inserted in a microwave field at a power of 1kW increases its temperature at a rate of at least 50°C/min until at least the temperature at which the binder at least partially liquefies.

9. A method according to the preceding claims, and comprising a step of molding, which is at least partially subsequent to the step of applying and during which pressure is applied to the mixture inserted in a mould.

10. A method according to one of the preceding claims, wherein the particles of substantially inert material are heterogeneously distributed in the mixture, which has at least one first zone, wherein the substantially inert material has a determined density, and at least one second zone, wherein the substantially inert material has a density at least one and a half the density of the first zone.

11. A method according to claim 10, wherein, considering equal extensions of the first and second zone, the number of particles in the substantially inert material in the first zone is lower than the number of particles in the substantially inert material present in the second zone.

12. A method according to claim 10 or 11, wherein the size of the particles of substantially inert material in the first zone is larger than the average size of the particles of the substantially inert material in the second zone.

13. A method according to one of the preceding claim, wherein the mixture comprises a first zone, wherein the particles of substantially inert material comprise a first material; and a second zone, wherein the particles of the substantially inert material comprise a second material, different from the first material.

14. A method: according to one of claims from 10 to 13, wherein the second zone is arranged at an edge of the article.

15. A method according to one of claims from 10 to 14, wherein the first zone is arranged within the article and the second zone is arranged at an outer surface of the article so that it at least partially covers the first zone.

16. A method according to one of claims from 1 to 8 and from 10 to 15, and comprising a step of extruding, which is at least partially subsequent to the step of applying and during which the mixture is extruded through a die of determined shape.

17. A method according to claim 16, wherein the mixture comprises from 60% to 85% by weight of the substantially inert material with respect to the total weight of the mixture.

18. A method according to claim 16 or 17, wherein the mixture is extruded and applied in the area of at least one outer margin of the article (in particular, a panel) so as to obtain an edge of the article.

19. A method according to one claim from 1 to 15, and comprising a step of coupling, during which the mixture is applied in the area of at least one outer margin of the article; the step of applying is at least partially subsequent to the step of coupling; an edge of the article is obtained at the end of the step of cooling.

20. A method according to claim 19, and comprising a step of inserting, during which an element made of at least partially microwave reflecting material is inserted in the area of the outer margin of the article; during the step of coupling, which is at least partially subsequent to the step of inserting, the mixture is applied so that the element of at least partially microwave reflecting material is arranged between an inner part of the article and the mixture.

21. A method according to one of the claims from 18 to 20, and comprising a step of machining of the margin, during which the outer margin of the article is milled and/or compressed and/or squeezed so as to obtain a channel, within which the mixture is applied and the element of at least partially microwave reflecting material is possibly inserted.

22. A method according to one of the preceding claims, wherein the liquid has a boiling temperature from 90°C to 250°C; the sum of the weights of the microwave opaque substance and of the binder is from 5% to 50% of the total weight of the mixture.

23. A method according to one of the preceding claims, wherein said mixture comprises from 1% to 20% by weight, of the liquid and Urea, with respect to the total weight of the mixture.

24. A method according to one of the preceding claims, wherein the mixture comprises from 8% by weight of the binder, with respect to the total weight of the mixture.

## Patentansprüche

1. Verfahren zum Herstellen von Artikeln, umfassend die folgenden Merkmale:
ein Schritt des Vermengens, bei dem Partikel eines wenigstens im Wesentlichen inaktiven Materials, Partikel wenigstens einer mikrowellenundurchlässigen Substanz und Partikel wenigstens eines organischen Binders miteinander vermengt werden, um ein Gemisch zu erhalten;
ein Schritt des Anwendens, bei dem das Gemisch mit Mikrowellen behandelt wird, damit die Partikel der mikrowellenundurchlässigen Substanz wenigstens partiell die Mikrowellen absorbieren und Energie in Form von Wärme abführen, welche den Binder erwärmt damit die Partikel des Binders sich binden und eine Matrix aus den Partikel des im Wesentlichen inaktiven Materials und den Partikel der mikrowellenundurchlässigen Substanz bilden; und
ein Schritt des Kühlens, welcher wenigstens teilweise nach dem Schritt des Anwendens folgt und dabei die Matrix wenigstens partiell bis zum Erhärten gekühlt wird;
das Gemisch 1 bis 20 Gew. %, bezogen auf das Gesamtgewicht des Gemisches, eine Flüssigkeit umfasst, die nicht mit anderen Komponenten des Gemisches während des Verfahrens reagiert und eine Siedetemperatur von kleiner als 270 °C aufweist; 50 bis 95 Gew. %, bezogen auf das Gesamtgewicht des Gemisches, des im Wesentlichen inaktive Materials umfasst; 0,1 bis 25 Gew. %, bezogen auf das Gesamtgewicht des Gemisches, die mikrowellenundurchlässige Substanz umfasst; 2,5 bis 20 Gew. % des Binders umfasst;
die Partikel des im Wesentlichen inaktive Materials können in platzierten Zustand nicht aneinander anhaften und einer Temperatur von bis zu 200 °C und einem Druck von bis zu 100 kg/cm², bei Abwesenheit anderer Elemente, ausgesetzt werden;
die mikrowellenundurchlässige Substanz ist eine Substanz, die fähig ist partiell Mikrowellen zu absorbieren und damit die Energie der absorbierten Wärme abzuführen.

2. Verfahren nach Anspruch 1, worin das Gemisch 75 bis 90 Gew. %, bezogen auf das Gesamtgewicht des Gemisches, des im Wesentlichen inaktive Materials umfasst; 5 bis 10 Gew. %, bezogen auf das Gesamtgewicht des Gemisches, der mikrowellenundurchlässige Substanz umfasst; ab 5 Gew. %, bezogen auf das Gesamtgewicht des Gemisches, den Binder umfasst.

3. Verfahren nach Anspruch 1 oder 2, worin die Partikel des im Wesentlichen inaktiven Materials eine Größe entweder kleiner oder gleich 50 mm aufweist; die Partikel der mikrowellenundurchlässigen Substanz weisen eine Größe entweder kleiner oder gleich 100 µm auf; die Partikel des Binders weisen eine Größe entweder kleiner oder gleich 120 µm auf.

4. Verfahren nach einem der vorangegangenen Ansprüche, worin die Partikel des im Wesentlichen inaktiven Materials eine Größe größer oder gleich 10 µm aufweisen; die Partikel der mikrowellenundurchlässigen Substanz eine Größe entweder größer oder gleich 0,1 µm aufweisen; die Partikel des Binders eine Größe entweder größer oder gleich 0,1 µm aufweisen.

5. Verfahren gleich einem der vorangegangenen Ansprüche, worin das im Wesentlichen inaktive Material eine thermische Leitfähigkeit von kleiner 10 W^{∗}m^{-1∗}K⁻¹ aufweist; der Binder ist fähig, sich wenigstens partiell bei einer Temperatur entweder kleiner oder gleich 200 °C und größer als 60 °C zu verflüssigen.

6. Verfahren nach einem der vorangegangenen Ansprüche, worin das im Wesentlichen inaktive Material hauptsächlich aus Cellulose und/oder Lignin besteht.

7. Verfahren nach Anspruch 6, worin das im Wesentlichen inaktive Material wenigstens partiell aus Hanf erhalten wird.

8. Verfahren nach einem der vorangegangenen Ansprüche, wobei die mikrowellenundurchlässige Substanz dermaßen ausgewählt wird, so dass ein Probestück davon beim Einbringen in einem Mikrowellenfeld mit einer Leistung von 1 kW dessen Temperatur in einem Bereich von wenigstens 50 °C/min erhöht, bis die Temperatur erreicht wird, bei welcher der Binder sich wenigstens partiell verflüssigt.

9. Verfahren nach einem der vorangegangenen Ansprüche, umfassend einen Schmelz-Schritt, welcher sich wenigstens partiell an den Schritt des Anwendens anschließt und dabei Druck aufgebracht wird um das Gemisch in eine Gießform einzubringen.

10. Verfahren nach einem der vorangegangenen Ansprüche, wobei die Partikel des inaktiven Materials heterogen in dem Gemisch bereitgestellt werden, und dieses dabei wenigstens eine erste Zone aufweist in der das inaktive Material eine bestimmte Dichte aufweist, und eine wenigstens zweite Zone aufweist in der das inaktive Material eine Dichte aufweist, die wenigstens das 1,5-fache der Dichte der ersten Zone entspricht.

11. Verfahren nach Anspruch 10, wobei bei einer gleichen Verlängerung der ersten und zweiten Zone, die Anzahl an Partikel des inaktiven Materials in der ersten Zone geringer als die Anzahl an Partikel des inaktiven Materials in der zweiten Zone ist.

12. Verfahren nach Anspruch 10 oder 11, wobei die Größe der Partikel des inaktiven Materials in der ersten Zone größer ist als die durchschnittliche Größe der Partikel des inaktiven Materials in der zweiten Zone.

13. Verfahren nach einem der vorangegangenen Ansprüche, wobei das Gemisch eine erste Zone aufweist, in der die Partikel des inaktiven Materials ein ersten Material aufweisen, und eine zweite Zone, in der die Partikel des inaktiven Materials ein zweites Material aufweisen welches unterschiedlich zum dem ersten Material ist.

14. Verfahren nach einem der Ansprüche 10 bis 13, wobei die zweite Zone an einer Kante des Gegenstandes angeordnet ist.

15. Verfahren nach einem der Ansprüche 10 bis 14, wobei die erste Zone in dem Gegenstand angeordnet ist, und die zweite Zone an einer äußeren Fläche des Gegenstandes angeordnet ist, sodass diese wenigstens partiell die erste Zone bedeckt.

16. Verfahren nach einem der Ansprüche 1 bis 8 und 10 bis 15, bei dem ein Schritt des Strangpressens vorgesehen ist, der wenigstens partiell zu dem Schritt des Anwendens erfolgt, und bei einer Anwendung das Gemisch durch einen Stempel mit einer gegebenen Form gepresst wird.

17. Verfahren nach Anspruch 16, wobei das Gemisch 60 bis 85 Gew. % des inaktiven Materials aufweist, bezogen auf das Gesamtgewicht des Gemisches.

18. Verfahren nach Anspruch 16 oder 17, wobei das Gemisch stranggepresst und auf der Fläche wenigstens eines äußeren Rands des Gegenstandes angewandt wird, so dass eine Kante des Gegenstandes erhalten wird.

19. Verfahren nach Anspruch 1 bis 15, bei dem ein Schritt des Verbindens vorgesehen ist, bei dem das Gemisch auf der Fläche wenigstens eines äußeren Rands des Gegenstandes angewandt wird; eine Kante wird am Gegenstand erhalten nach dem Ende des Kühlungsschrittes.

20. Verfahren nach Anspruch 19, bei dem ein Schritt des Einfügens vorgesehen ist, bei dem ein Element, welches aus wenigstens einem mikrowellenreflektierenden Material besteht, in eine äußere Fläche des Gegensandes eingefügt ist; während des Schrittes des Verbindens, der wenigstens teilweise zum dem Schritt des Einfügens nachgelagert ist, das Gemisch angewandt wird, sodass das Element aus dem wenigstens teilweise mikrowellenreflektierenden Material zwischen einem inneren Teil des Gegenstandes und dem Gemisch angeordnet wird.

21. Verfahren nach einem der Ansprüche 18 bis 20, bei dem ein Schritt der Bearbeitung des Rands vorgesehen ist, während dem der äußere Rand des Gegenstandes gefräst und/oder komprimiert und/oder gedrückt wird, sodass ein Kanal erhalten wird, indem das Gemisch angewandt wird und das Element des wenigstens teilweise mikrowellenreflektierenden Materials eingeführt wird.

22. Verfahren nach einem der vorangegangenen Ansprüche, wobei die Flüssigkeit eine Siedetemperatur von 90 °C bis 250 °C aufweist; die Summe der mikrowellenundurchlässigen Substanz und des Binders von 5 bis 50 % des Gesamtgewichts des Gemisches aufweist.

23. Verfahren nach einem der vorangegangenen Ansprüche, wobei das Gemisch 1 bis 20 % der Flüssigkeit und Urea aufweist, bezogen auf das Gesamtgewicht des Gemisches.

24. Verfahren nach einem der vorangegangenen Ansprüche, wobei das Gemisch ab 8 % des Binders aufweist, bezogen auf das Gesamtgewicht des Gemisches.

## Revendications

1. Procédé de fabrication d'articles, le procédé comprenant :
une étape de mélange, durant laquelle des particules d'au moins un matériau pratiquement inerte, des particules d'au moins une substance opaque aux micro-ondes et des particules d'au moins un liant organique sont mélangées les unes avec les autres de façon qu'un mélange soit obtenu ;
une étape d'application, durant laquelle ledit mélange est traité avec des micro-ondes de façon que les particules de la substance opaque aux micro-ondes absorbe au moins partiellement les micro-ondes et dissipe l'énergie sous forme de chaleur, qui chauffe le liant de façon à permettre aux particules du liant lui-même de se lier et de constituer une matrice dans laquelle les particules de matériau pratiquement inerte et les particules de substance opaque aux micro-ondes sont insérées ; et
une étape de refroidissement, qui est au moins partiellement subséquente à l'étape d'application, et durant laquelle la matrice est refroidie, en solidifiant au moins partiellement ;
le mélange comprenant de 1 % à 20 % en poids, par rapport au poids total du mélange, d'un liquide qui ne réagit pas avec les autres composants du mélange dans les conditions du procédé et qui a un point d'ébullition inférieur à 270 °C ; de 50 % à 95 % en poids, par rapport au poids total du mélange, du matériau pratiquement inerte ; de 0,1 % à 25 % en poids, par rapport au poids total du mélange, de la substance opaque aux micro-ondes ; de 2,5 % à 20 % en poids, par rapport au poids total du mélange, du liant ;
le matériau pratiquement inerte étant tel que ses particules ne peuvent pas se lier les unes aux autres si elles sont placées en contact et soumises à une température allant jusqu'à 200 °C, sous une pression allant jusqu'à 100 kg/cm² et en l'absence d'autres éléments ; la substance opaque aux micro-ondes étant capable au moins partiellement d'absorber les micro-ondes et de dissiper l'énergie ainsi absorbée en chaleur.

2. Procédé selon la revendication 1, dans lequel le mélange comprend de 75 % à 90 % en poids, par rapport au poids total du mélange, du matériau pratiquement inerte ; de 5 % à 10 % en poids, par rapport au poids total du mélange, du matériau opaque aux micro-ondes ; 5 % en poids, par rapport au poids total du mélange, du liant.

3. Procédé selon la revendication 1 ou 2, dans lequel les particules de matériau pratiquement inerte ont des tailles inférieures ou égales à 50 mm ; les particules de substance opaque aux micro-ondes ont des tailles inférieures ou égales à 100 µm ; les particules du liant ont des tailles inférieures ou égales à 120 µm.

4. Procédé selon l'une des revendications précédentes, dans lequel les particules de matériau pratiquement inerte ont des taillées supérieures ou égales à 10 µm ; les particules de la substance opaque aux micro-ondes ont des tailles supérieures ou égales à 0,1 µm ; les particules du liant ont des tailles supérieures ou égales à 0,1 µm.

5. Procédé selon l'une des revendications précédentes, dans lequel le matériau pratiquement inerte a une conductivité thermique inférieure à 10 W•m⁻¹•K⁻¹ ; le liant est capable de se liquéfier au moins partiellement à une température inférieure ou égale à 200 °C et supérieure à 60 °C.

6. Procédé selon l'une des revendications précédentes, dans lequel le matériau pratiquement inerte est constitué principalement de cellulose et/ou de lignine.

7. Procédé selon la revendication 6, dans lequel le matériau pratiquement inerte est au moins partiellement obtenu à partir de chanvre.

8. Procédé selon l'une des revendications précédentes, dans lequel la substance opaque aux micro-ondes est choisie de façon qu'un échantillon de celle-ci insérée dans un champ de micro-ondes à une puissance de 1 kW augmente sa température à une vitesse d'au moins 50 °C/min au moins jusqu'à la température à laquelle le liant liquéfie au moins partiellement.

9. Procédé selon l'une des revendications précédentes, comprenant une étape de moulage, qui est au moins partiellement subséquente à l'étape d'application, et durant laquelle une pression est appliquée au mélange inséré dans un moule.

10. Procédé selon l'une des revendications précédentes, dans lequel les particules de matériau pratiquement inerte sont distribuées de façon hétérogène dans le mélange, qui a au moins une première zone dans laquelle le matériau pratiquement inerte a une densité déterminée, et au moins une deuxième zone dans laquelle le matériau pratiquement inerte a une densité d'au moins une fois et demie la densité de la première zone.

11. Procédé selon la revendication 10, dans lequel, si l'on considère des extensions identiques des première et deuxième zones, le nombre de particules dans le matériau pratiquement inerte dans la première zone est inférieur au nombre de particules dans le matériau pratiquement inerte présent dans la deuxième zone.

12. Procédé selon la revendication 10 ou 11, dans lequel la taille des particules de matériau pratiquement inerte dans la première zone est supérieure à la taille moyenne des particules du matériau pratiquement inerte dans la deuxième zone.

13. Procédé selon l'une des revendications précédentes, dans lequel le mélange comprend une première zone dans laquelle les particules de matériau pratiquement inerte comprennent un premier matériau ; et une deuxième zone dans laquelle les particules du matériau pratiquement inerte comprennent un deuxième matériau différent du premier matériau.

14. Procédé selon l'une des revendications 10 à 13, dans lequel la deuxième zone est disposée au niveau d'un bord de l'article.

15. Procédé selon l'une des revendications 10 à 14, dans lequel la première zone est disposée dans l'article et la deuxième zone est disposée au niveau d'une surface supérieure de l'article de façon à recouvrir au moins partiellement la première zone.

16. Procédé selon l'une des revendications 1 à 8 et 10 à 15, et comprenant une étape d'extrusion, qui est au moins partiellement subséquente à l'étape d'application et durant laquelle le mélange est extrudé à travers une filière de forme déterminée.

17. Procédé selon la revendication 16, dans lequel le mélange comprend de 60 % à 85 % en poids du matériau pratiquement inerte, par rapport au poids total du mélange.

18. Procédé selon la revendication 16 ou 17, dans lequel le mélange est extrudé et appliqué dans la zone d'au moins une bordure extérieure de l'article (en particulier d'un panneau) de façon que soit obtenu un bord de l'article.

19. Procédé selon l'une des revendications 1 à 15, comprenant une étape de couplage, durant laquelle le mélange est appliqué dans la zone d'au moins une bordure extérieure de l'article ; l'étape d'application étant au moins partiellement subséquente à l'étape de couplage ; un bord de l'article étant obtenu à la fin de l'étape de refroidissement.

20. Procédé selon la revendication 19, comprenant une étape d'insertion durant laquelle un élément fait de matériau réfléchissant au moins partiellement les micro-ondes est inséré dans la zone de la bordure extérieure de l'article ; durant l'étape de couplage, qui est au moins partiellement subséquente à l'étape d'insertion, le mélange est appliqué de façon que l'élément en un matériau réfléchissant au moins partiellement les micro-ondes soit disposé entre une partie intérieure de l'article et le mélange.

21. Procédé selon l'une des revendications 18 à 20, comprenant une étape d'usinage de la bordure, durant laquelle la bordure extérieure de l'article est meulée et/ou comprimée et/ou pressée de façon que soit obtenu un canal dans lequel le mélange est appliqué et l'élément de matériau réfléchissant au moins partiellement les micro-ondes est éventuellement inséré.

22. Procédé selon l'une des revendications précédentes, dans lequel le liquide a un point d'ébullition de 90 °C à 250 °C ; la somme des poids de la substance opaque aux micro-ondes et du liant est de 5 % à 50 % en poids total du mélange.

23. Procédé selon l'une des revendications précédentes, dans lequel ledit mélange comprend de 1 % à 20 % en poids du liquide et d'urée, par rapport au poids total du mélange.

24. Procédé selon l'une des revendications précédentes, dans lequel le mélange comprend 8 % en poids du liant par rapport au poids total du mélange.
